# EUROPEAN PATENT APPLICATION

(11) **EP 0 641 120 A1**
(43) Date of publication of application: **01.03.1995**
(21) Application number: 94850138.2
(22) Date of filing: 17.08.1994
(51) Int. Cl.: H04N 1/44, H04N 1/327

(54) **An apparatus for transmitting and receiving messages**

(30) Priority: 26.08.1993 SE 9302757
(71) Applicant: NYBO SEAL SYSTEM AB, S-100 74 Stockholm (SE)
(72) Inventor: Björkman, Claes, S-112 64 Stockholm (SE); Lundblad, Leif, S-115 21 Stockholm (SE)
(74) Representative: Nilsson, Karl Ingvar

(57) **Abstract**

A telefacsimile-type apparatus (1,2) for transmitting and receiving includes automatic message-enveloping means (12,22).

The apparatus (2) further includes means (231) for delivering an identity signal concerning the possible availability of an enveloping facility, upon receiving a call from another apparatus (1); means (132) for receiving an identity signal concerning the possibility of an enveloping facility from another (2) apparatus; and means (133) for sending to the called apparatus (2) a control signal in response to a separate identity signal received from the called apparatus (2), and in response to the setting of activating means (1331) having one setting which corresponds to ordering a transmitted message to be enveloped and another setting which corresponds to ordering the message not to be enveloped.

## Description

### TECHNICAL FIELD

The present invention relates to message transmitting and receiving apparatus, more particularly to apparatus of the telefacsimile kind that are provided with means for automatically enveloping received messages.

### BACKGROUND ART

It is known, for instance, from U.S. Patent Specification 5 031 379 to provide message receiving apparatus of the kind equipped with a paper store and a printing mechanism for printing messages onto paper sheets taken from said store, and a store of enveloping material for emveloping sheets that carry printed messages, with a closed casing which houses means for bundling printed sheets together as they are printed and means for enveloping the bundled sheets with enveloping material taken from the enveloping material store.

Such apparatus effectively prevent uncontrolled spreading of transmitted and printed messages.

Over a transition period there will be found installed apparatus that do not include this enveloping function and apparatus which do include said function, and consequently a person transmitting from a telefacsimile apparatus cannot always be certain that a contemplated receiver has apparatus which includes this enveloping function. The sender will then perhaps elect to send the message in another way (by letter), in order to be certain that the message will not be spread in an uncontrolled manner.

It may also be so that the person sending a message knows that the receiver has apparatus with which a received message is securely and safely enveloped, but that in certain cases the nature of the message is not such as to require such strenuous (and perhaps more expensive) security against spreading of the message and/or that the message should rather reach the addressee at the receiving apparatus as quickly as possible.

The object of the present invention is to improve the senders possibility of transmitting a message more securely and more quickly than is possible at present, in a controlled fashion.

### SUMMARY OF THE INVENTION

An apparatus of the aforesaid kind and constructed in accordance with the present invention includes means for delivering a separate identity signal concerning enveloping possibilities, upon receipt of a call from another apparatus; means for receiving from another apparatus a separate identity signal concerning enveloping possibilities; and means for transmitting control signals to called apparatus in response to a separate identity signal earlier received from called apparatus and in response to the occurrent setting of a separate activating means which has one setting for ordering the enveloping of subsequently transmitted messages and another setting for ordering non-enveloping of the message.

### BRIEF DESCRIPTION OF THE DRAWINGS

The invention will now be described in more detail with reference to the accompanying drawing, in which
Figure 1 illustrates schematically two apparatus constructed in accordance with the invention, and
Figure 2 is a slightly enlarged view of part of one of the apparatus shown in Figure 1.

### DESCRIPTION OF A PREFERRED EMBODIMENT

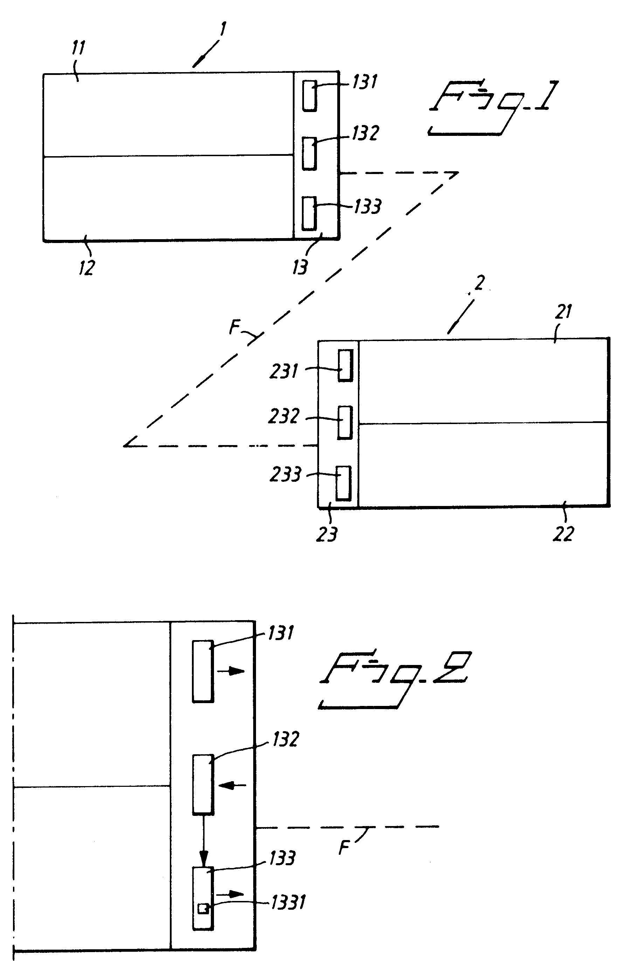

Figure 1 illustrates a telefacsimile-type apparatus 1 provided with means for automatically enveloping a received message. The actual telefacsimile-part (the upper part) is references 11 and the enveloping part (the lower part) is referenced 12. The apparatus 1 can be connected-up in a known manner to a similar apparatus 2, having a telefacsimile-part 21 and an enveloping part 22. This connection may be established through a telephony connection or a radio connection, commonly referenced F. The transmission and receipt of telefacsimile messages has long been known to the art and will not therefore be described in detail here.

The apparatus 1 has a processing unit 13 which includes, among other things, means 131 for delivering a separate identity signal relating to enveloping possibilities upon receipt of a call from another apparatus; means 132 for receiving from another called apparatus a separate identity signal concerning the enveloping possibilities; and means 133 for transmitting a control signal to a called apparatus in response to a separate identity signal earlier received from said called apparatus, and in response to the occurrent setting of separate activating mean 1331 having one setting (e.g. a depressed position) for ordering the enveloping of subsequently transmitted messages, and another setting (not depressed) for ordering the message not to be enveloped.

The apparatus 2 has a processing unit 23 which includes three corresponding means 231,232,233, and is thus, in principal, identical to the apparatus 1.

When a message is to be sent from the apparatus 1 to the apparatus 2, there is first made a call in a conventional manner. As soon as a connection has been set up, a separate identity signal is sent automatically from the means 231 of the apparatus 2 to the means 132 of the apparatus 1. This discloses that at least the apparatus 2 has a message enveloping facility. The person transmitting on apparatus 1 can now decide whether or not the message shall be enveloped in apparatus 2. The separate identity signal earlier arriving at the means 132 prepares the means 133 and by activating the separate activating means 1331 (e.g. by pressing a button or pushing down a switch ) the means 133 is caused to send a control signal to the apparatus 2 and therewith activate the enveloping function of the apparatus 2.

If no separate identity signal is sent to the means 132, or if the activating mean 1331 is not activated, no control signal is sent via the means 133 and the enveloping function of the apparatus 2 will not be activated.

The control signal transmission function of the means 133 can be achieved in many different ways, and may also be more or less automatic. The person transmitting from the apparatus 1 can make his/her decision for the message to be enveloped known, by applying a stamp to the message to be sent. The apparatus automatically detects the stamp and therewith activates the means 133, for instance in accordance with the rule: applied stamp - send control signal, no stamp - no control signal. As an alternative to a stamp system, the automization may be extended one step further. Messages for transmission may be recorded on one of two different types of paper; the first type of paper will have a mark applied thereto (representing enveloping for instance) and the second type of paper will carry no such mark. The person transmitting a message will then select the appropriate paper and the apparatus will detect the type of paper selected. The activating means 1331 is then activated in accordance with the type of paper selected, without further action on the part of the person transmitting the message.

When mention is made in the aforegoing to the transmission of a control signal for ordering enveloping of a message or ordering that the message shall not be enveloped, it will be of course be understood that the order for enveloping a message may be sent with the aid of a given control signal while in the case when the message shall not be enveloped the control signal is not sent within a given predetermined time period, which is thus detected by the receiver side.

## Claims

1. A telefacsimile-type message transmitting and receiving apparatus (1,2) provided with means (12,22) for automatically enveloping a received message, characterized by means (231) for delivering a separate identity signal relating to an enveloping possibility upon receipt of a call from another calling apparatus (1);
means (132) for receiving from another, called apparatus (2) a separate identity signal concerning an enveloping possibility;
means (133) for sending to said called apparatus (2) a control signal in response to a separate identity signal earlier received from said called apparatus (2) and in response to the setting of a separate activating means (1331) having one setting which corresponds to ordering the enveloping of a subsequently sent message and another setting which corresponds to ordering the message not to be enveloped.
